# EUROPEAN PATENT SPECIFICATION

(11) **EP 3 059 484 B1**
(45) Date of publication and mention of the grant of the patent: **21.08.2019**
(21) Application number: 15465527.8
(22) Date of filing: 25.06.2015
(51) Int. Cl.: F16L 55/32

(54) **AUTONOMOUS ROBOT FOR THE INSPECTION AND MAINTENANCE OF LARGE-SIZED PIPES AND METHOD OF ITS EXPLOITATION**
AUTONOME ROBOTER FÜR DIE INSPEKTION UND WARTUNG VON GROSSEN ROHRE UND VERFAHREN ZU SEINER EXPLOITATION
ROBOT AUTONOME POUR L'INSPECTION ET L'ENTRETIEN DES TUYAUX DE GRANDE TAILLE ET LA MÉTHODE DE SON EXPLOITATION

(30) Priority: 19.02.2015 RO 201500125
(43) Date of publication of application: 24.08.2016
(73) Proprietor: Tomoiaga, Adrian, 435200 Borsa, jud. Maramures (RO); Dale, Daniel Ionica, 84000 Avignon (FR); Drimus, Dan Mihai, 01000 Bourg en Bresse (FR)
(72) Inventor: Tomoiaga, Adrian, 435200 Borsa, jud. Maramures (RO); Dale, Daniel Ionica, 84000 Avignon (FR); Drimus, Dan Mihai, 01000 Bourg en Bresse (FR)

(56) References cited:
- WO-A1-2012/167380
- JP-A- H0 243 972
- JP-A- H0 921 173
- JP-A- 2002 224 875
- JP-A- 2003 225 626
- KR-A- 20140 036 419
- US-A- 5 146 644
- US-A- 5 960 882

## Description

The current invention refers to a mobile robot aimed at the maintenance of the inner surfaces of large-sized pipes that completes operations of cleaning, painting and inspection.

There is known a system for the maintenance of the inner surfaces of the pipes [EP2503208] made of a trolley for the use of the tools supported by an assembly of cables and winches which allows the movement of the mobile assembly along the inner side of the pipe. The trolley is made of a frontal mobile part and one situated on the rear side, which are connected by means of a connecting crosspiece onto which there is mounted a core with three radial arms that carry tools. The core can revolve around the crosspiece, allowing the tools to scavenge on the inner circumference of the pipe. The cables and the winches ensure a rough positioning of the trolley alongside the pipe, while the core grants a precise, accurate one.

The disadvantage of the system consists in the impossibility of enabling a uniform, constant movement alongside the pipe and on its circumference. Another disadvantage consists in the use of the three working arms, which presents a disadvantage in terms of the uniformity of the processing of the inner surface.

Document JP H09 21173 presents a device for cleaning the pipeline that consists of two transport groups with wheels and a swivel head with washing tools. The driven wheels are placed on two extendable arms, which are positioned in median plane of the pipe. The device is maintained in the median plane with another group of wheels that make contact with the interior ceiling pipe, floating up using a compressed air tank.

The main disadvantage of this invention is that it cannot be used when the pipes are empty.

The problem that the current invention solves is that of completing a mobile robot that can move by being controlled from distance, one that is equipped with its own moving system and systems of tool manoeuvring that are specific to the maintenance of pipes, which allow the extremely precise completion of the operations that are characteristic of the maintenance of large-sized pipes.

The autonomous robot for the inspection and maintenance of large-sized pipes described by the current invention eliminates the above-mentioned disadvantages, due to the fact that it is conceived as module-shaped, with a central module that plays the role of frame, three movement modules that are placed at 120°, adjustable to the diameter of the pipe, and equipped with motorized wheels with tyres, and a rotating module equipped with two radial extensible and oriented arms, one for tools, and the other one for inspection, in the curved areas of the pipe being possible for the arms to move on a perpendicular plane on the longitudinal axis of the robot through a translation joint. For the operations of sanding, the arm for the tools allows the rotation of the trolley for the tools and of the flexible charging hose by means of a motor and of a conic assembly, or by means of a flexible shaft and two conic assemblies, the movement being taken over from the movement of the rotation module via a planetary transmission with a ratio of i=-1, while for the painting operations the tool does not complete rotary movements, the paint under pressure being carried to a spray mounted onto the tool holder by means of a flexible hose fitted with a rotating joint charged through the inner part of a central pipe.

The working arm can be fitted with the following tools:
- washing head with high-pressure flow
- head for hydro-sanding
- head for the abrasive-based sanding
- head for the propeller-based sanding
- nozzles for degreasing
- tools for painting and finishing
- ironing head
- welding head

The inspection arm can be fitted with the following tools:
- movable video cameras for inspection and
- video cameras for macro view and perspective
- supporting wheel for the compensation of the reaction force of the flow when using the high-pressure flow for washing or sanding
- proximity sensor
- electronic roughness tester
- hydrometer, porosimeter, spectrometer
- ambient and contact thermometers
- devices for the chemical determination
- devices for the detection of leaks (rays "X", Gamma)
- etc.

An arm is used for the tools, while the other, for mounting some video cameras and other instruments of control.

In order to broom the inner surface of the pipe, the arms of the robot complete a continuous rotating movement around the longitudinal axis of the robot. In order to adjust the angle of approach, the tool with the surface of the pipe, the support of the tool holder mounted on the arm can rotate. For the regulation of the distance between the tool and the wall, the arms of the tool holder can lean against a perpendicular plane on the longitudinal axis of the robot.

The robot is aimed, according to the invention, to complete the following operations:
- sanding using abrasives
- sanding using nails
- washing using a high-pressure jet
- operation of surface inspection
- painting with high-pressure pistons
- electrostatic painting
- electronic monitoring and recording of the technological process itself and of further inspections.

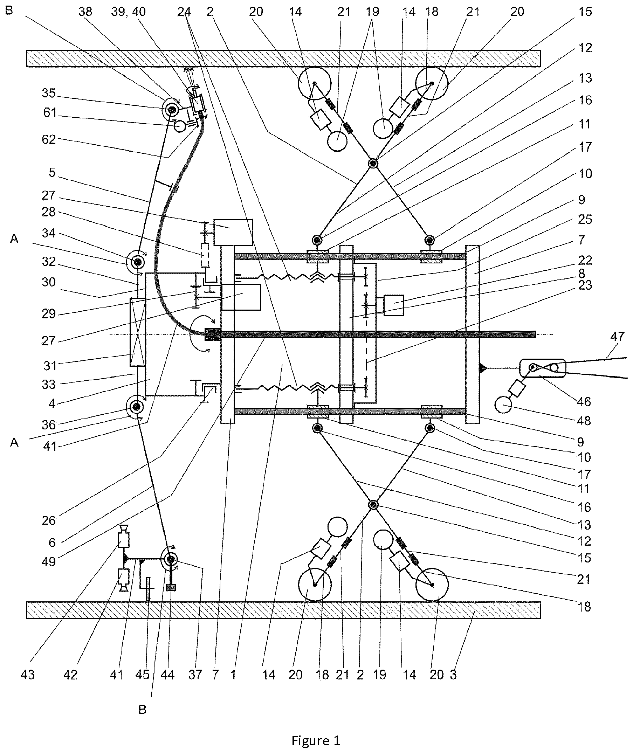

In what follows there is provided an example of the completion of the invention in relation to figures 1-n, which represent:
- figure 1, the kinematic scheme of the robot
- figure 2, the kinematic scheme of the robot in the version with rotating head operated by a flexible shaft
- figure 3, the kinematic scheme of the robot equipped for painting
- figure 4, the scheme of charging with air, current and mixture of sanding
- figure 5, the robot's architecture, view from the head of sanding
- figure 6, the robot's architecture, rear view
- figure 7, the robot's architecture, elevation
- figure 8, the robot's architecture, lateral view
- figure 9, the central body, isometric view
- figure 10, the traction group, isometric view
- figure 11, the rotating head, isometric view
- figure 12 -the cleaning scheme
- figure 13, the robot's architecture with stabilising bars, front view
- figure 14, the robot's architecture with stabilising bars, isometric view
- figure 15, the stabilising bar, isometric view
- figure 16, the robot control scheme.

The autonomous robot for the inspection and maintenance of large-sized pipes is made of a central body 1, supported by three movement modules 2 that grant the movement of the robot inside a pipe 3, and the rotating module 4, equipped with two arms 5 and 6 with tools typical of the operations completed.

The main body 1 is made of two lateral plates 7 and a central plate 8, stiffened by means of some rods 9 that play the role of guiding ball bushings 10 and 11 which make the connection with the movement module 2.

The movement module 2 is made of two bars 12 and 13 which support the movement groups 14. The bars 12 and 13 are articulated by a rotating joint 15 and form a pair of scissors whose role is to maintain the contact with the inner walls of pipe 3. Bar 12 is articulated by a rotating joint 16 to the mobile ball bushings 11, while bar 13 is articulated by a rotating joint 17 to the fixed ball bushings 10.

Each transport group 14 is fitted with a support 18 which supports a gear-motor 19 that operates wheels 20.

For an easier adjustment of the robot to different diameters of pipes, the support 18 can be mounted directly on the articulated bars 12 and 13, or by means of an extension cord 21.

The maintenance of the contact between the wheels 20 and the inner walls of pipe 3 is completed through the elasticity of the tyres of wheels 20.

In the initial phase, the positioning of the movement modules 2 is achieved by means of the corresponding positioning of ball bushing 10 and their blocking on the rods 9. Then, for the tensioning of wheels 20 on the inner walls of pipe 3, there is activated motor 22, which turns, due to the mechanical transmission 23, screws 24, which move ball bushing 11, modifying the angle between the bars 12 and 13.

Transmission 23 is protected by means of a lid 25.

The rotating module 4 is mounted on a bearing 26 fixed by the plate 7 of the main body 1 situated in front of the robot, towards the arms 5 and 6. The rotation of module 4 is completed by a motor 27, placed on the outer side of the module 4, by means of a mechanical transmission 28.

In a different version, motor 27 can be placed on body 1, and it engages module 4, through transmission with toothed wheels 29 placed in the body 30 of module 4.

On the frontal side of module 4 there has been mounted a translation joint 31 which allows a compensatory movement of bars 32 and 3, and, implicitly, of arms 5 and 6, which is necessary to the curved areas of pipe 3.

In order to ensure the orientation and positioning of the tools in relation to the inner surface of the pipe 3, each arm 5, and 6, respectively, is articulated by means of two rotating joints 34, 35, 36 and 37, respectively.

On arm 5 there is articulated, to rotating joint 35, a semi-arm 38 with a tool holder 39 in which there is fixed a tool 40 for sanding, painting, etc.

In order to complete certain operations, mainly sanding, tool holder 39 can complete rotary movements.

On arm 6 there has been mounted a semi-arm 41 which supports one or to video cameras 42 and 43, a proximity sensor 44, and, depending on the case, a support roll 45. The video cameras 42 and 43 can move around the articulation 37 so that they can record images of the pipe's inner circumference, of the segment alongside its length, as well as of the robot's condition.

The images recorded by the video cameras 42 and 43 are used for the inspection of the pipes, for programming the maintenance operations, as well as for demonstrating the operation procedure, its quality, and the quality control.

A trolley 46 with a cable 47 plays the role of maintaining the robot, especially in places where the slope of the pipe is significant. The trolley is operated by its own motor 48 which works synchronically with the traction groups 14 in order to maintain a constant tension in cable 47.

For the sanding process, tool 40 is charged using a flexible hose 41, connected to a charging pipe 49.

An end of hose 41 is connected to pipe 49 by means a fixed collar 50. The other end is connected to tool 40 through a different collar 50 and of a fitting 51. The flexible hose 41 is held by some supports that allow the rotation of the hose around its own axis, in a way that is similar to the cardanic transmission.

Pipe 49 can be eliminated, case in which hose 41 goes through the interior of the robot, being fixed by means of a collar to plate 7 from trolley 46.

When using the sanding hose 41, the rotation of the support of the tool holder 39 with tool 40, anticlockwise, with a transfer ratio i=-1, is mandatory.

In another version of the connection, hose 41 can be connected by means of rotating joints, not represented in the figures.

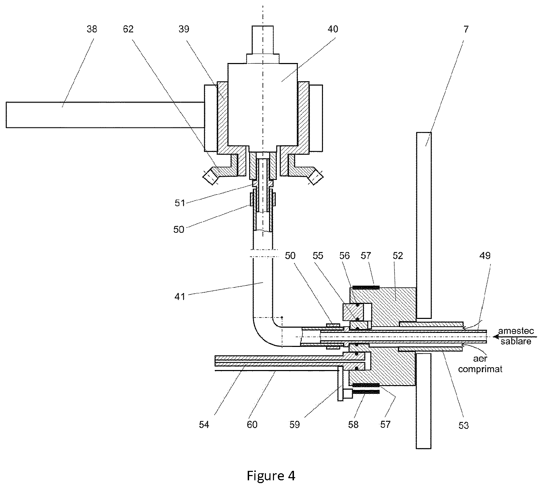

To plate 7 of module 4 (fig. 4) there is fixed a body 52 which supports a pipe 53, concentric to pipe 49. The charge with compressed air of the rotating module is completed through the room between the pipes 49 and 53 by means of the rotating joint 54. The joint 54 is sealed on the inner ring, and on the outer one, respectively, by means of the seals 55 and 56, respectively. The charge with current is completed through the connection to the brushes or inductively, having a stable part 57 and a rotating part 58. The rotating part 58 is attached to the support 59 to which there is connected cable 60.

In example 1 from figure 1, the rotation of the support of the tool holder 39 with tool 40 and of the flexible hose 41 is completed via a motor 61 and a gearing 62.

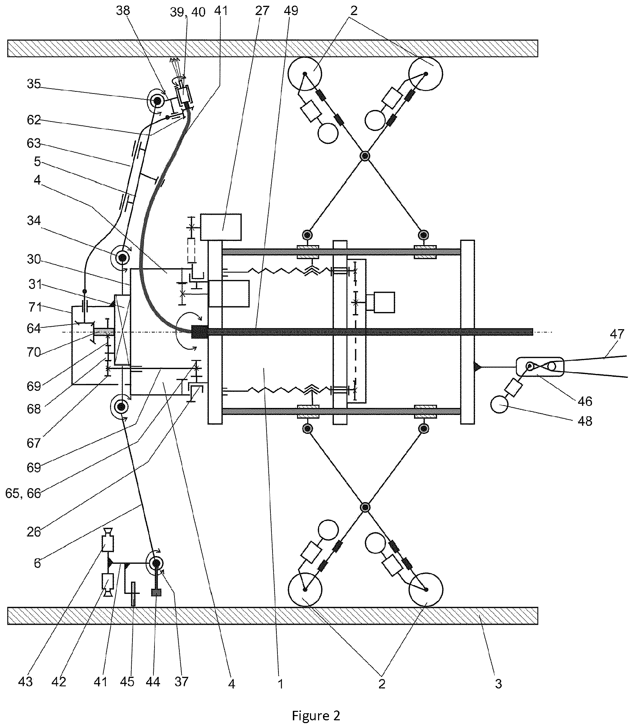

In the example from figure 2, the rotation of the support of the tool holder 39 and of the flexible hose 41 is completed through a flexible shaft 63 and of gearings 62 and 64. The flexible shaft 63 is operated by the rotating module 4 by means of a planetary transmission with teethed wheels 65-68. A port-satellite axis 69 attached through bearings to body 30 is set in movement by the pinion 66 which engages the wheel with inner teeth 65. From the axis 69 the movement is transmitted by means of the wheels 67, 68 and 69 to the central axis 70, and here, by means of the conic gearing 64, the movement arrives to the flexible shaft 63. The total transfer ratio from the wheel with inner teeth 65 to the tool holder 39 is i=-1. Thus, while module 4 completes the rotating movement, the joint that serves as a conic teethed wheel on the tool holder 39 will make the same movement, but in a reverse sense.

The planetary gearings are protected in a casing 71.

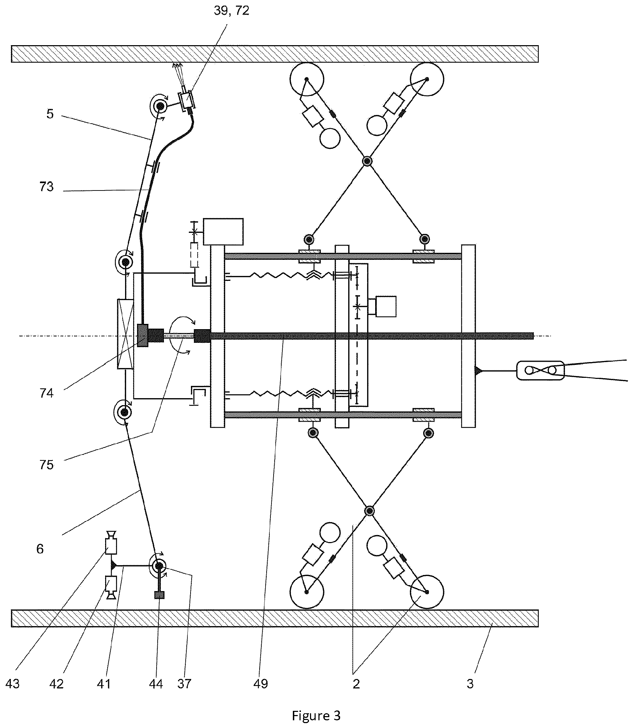

Figure 3 shows the robot as equipped for the painting. The painting is completed under pressure (above 100 daN/cm²). The paint is brought to the spray 72 mounted on the tool holder 39 using a flexible hose 73 equipped with a rotating joint 74. The rotating joint is charged through the inner side of pipe 49 by means of a pipe 75.

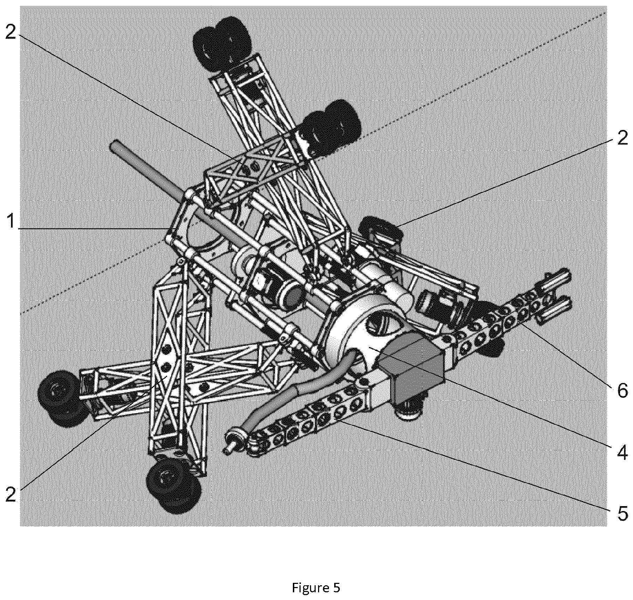

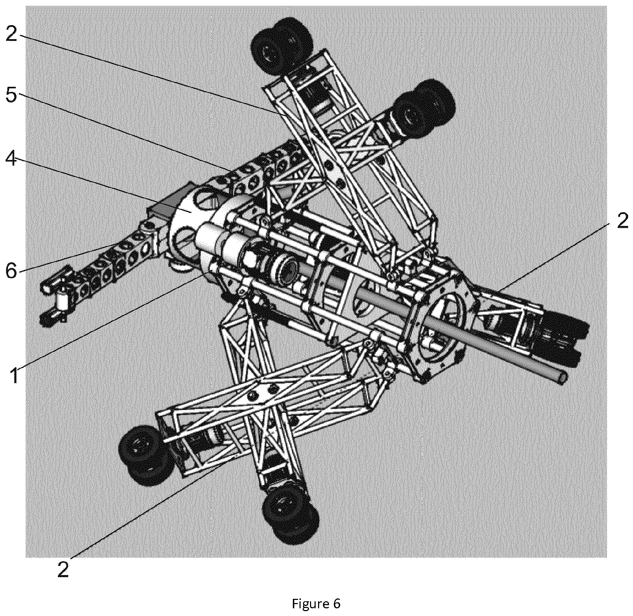

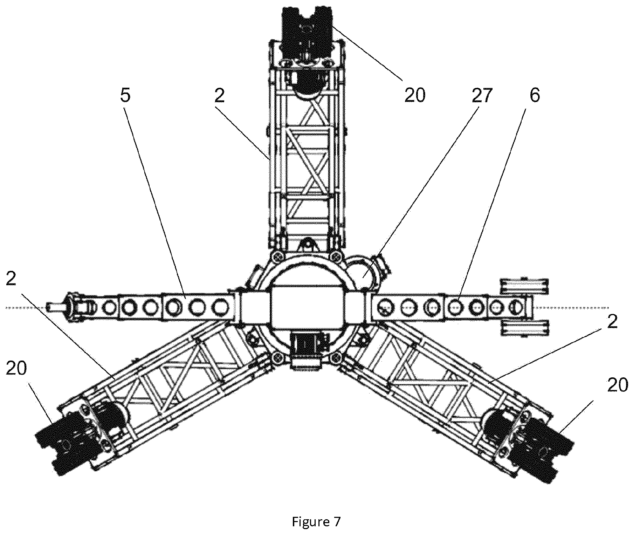

Figures 5-8 show the robot architecture. The robot is made of the central body 1, three movement modules 2 and a rotating module 4 equipped with two arms 5 and 6.

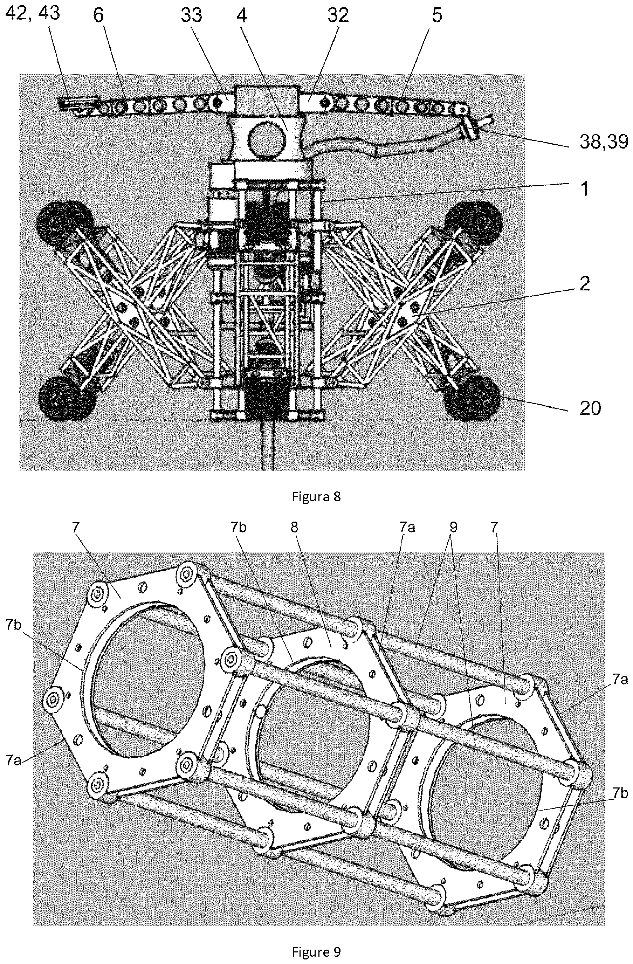

The central body 1 (figure 9) is made of two plates 7, mounted at the end, and a plate 8, mounted between the side plates 7. The plates 7 and 8 have a hexagonal-shaped outer contour 7a and a bore 7b which creates a space in which there are mounted other robot guidelines. The fixing holes of the rods 9 are processed so that they allow the precise alignment and the plate stiffening.

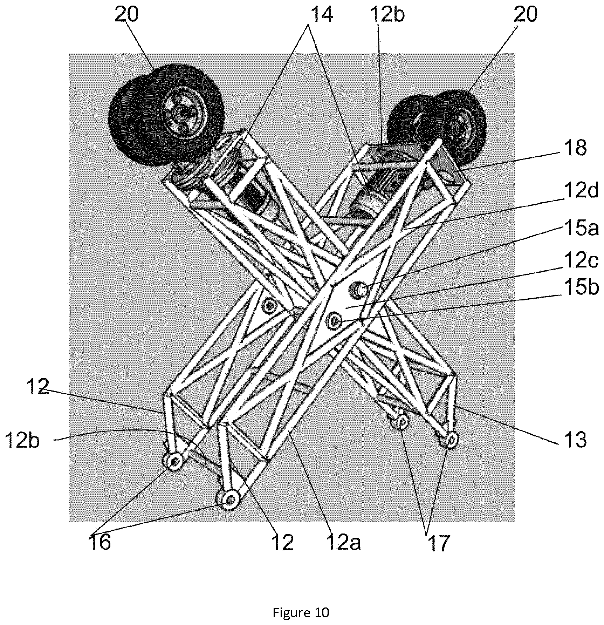

The movement module 2 (figure 10) has the shape of a pair of scissors, and it is made of two bars 12 and 13 that support the movement groups 14.

Bars 12 and 13 have the shape of plates with lattice, and they are made of two lateral walls 12a each, connected through cross bars 12b. Each wall 12a is fitted with a rhombus-shaped central plate 12c that is framed by two lattice pieces 12d, mounted in an "X"-shaped position. The central plate 12c is equipped with two or more bores 15a, 15b which allow the appropriate positioning of the rotating joint 15. This positioning is particularly used when extension cords 21 are used.

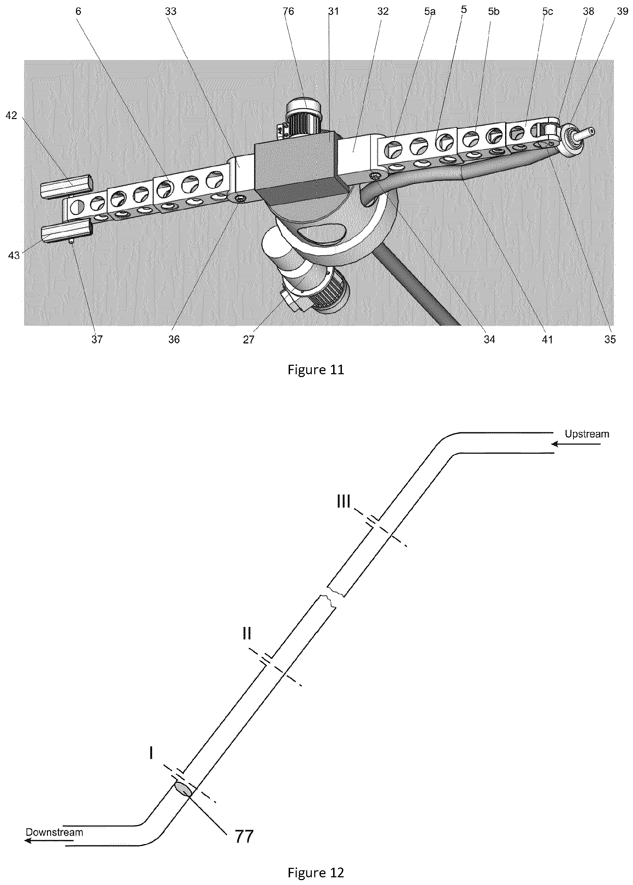

The rotating module 4 (fig. 11) is mounted on a bearing 26 attached to the plate 7 of the main body 1, and it supports the arms 5 and 6. To ensure the rigidity and the adaption to various diameters of the pipe, the arms 5 and 6 are conceived in a telescopic structure made of a number of square pipes 5a, 5b, 5c, which glide in each other. The adjustment of the initial length of the arm is completed by blocking the pipes with some bolts not represented in the figures. A motor 76 maintains the distance from the walls of pipe 3 by acting arms 32 and 33.

In order to carry out inspection sessions that involve personnel, the robot is equipped with the possibility of attaching a platform to the rear part, towards trolley 46. The platform can safely transport a person that inspects the pipe and communicates with the personnel outside.

The cleaning of the pipes is completed gradually, part by part, starting with the downstream segments (I, II, III, ...), through their inspection holes.

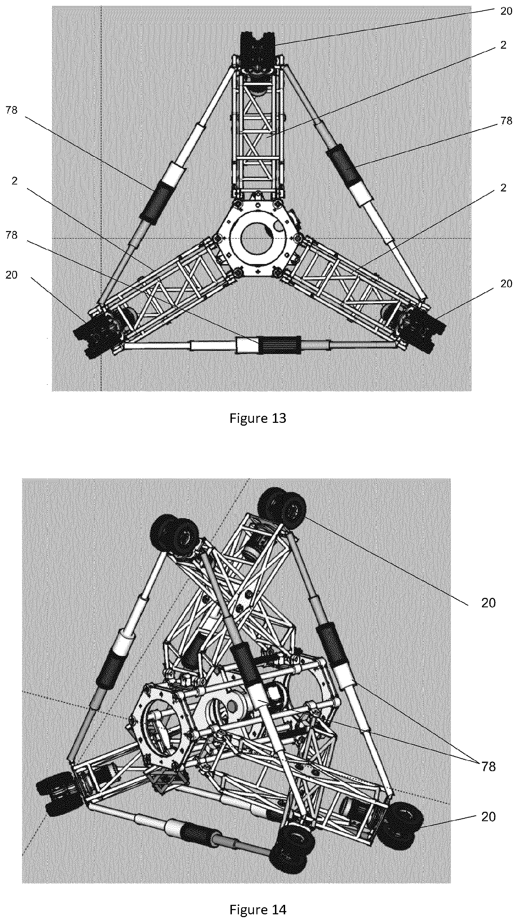

In order to enhance the stability and improve the contact between the wheels 20 and the pipe 3, especially when the diameter of the pipe is large, there are used three pairs of stabilising bars 78 (fig. 13, 14).

Each stabilising bar 78 is made of a pneumatic cylinder 79 that is equipped at one end with a connecting part 80, and at the other, with a rod 81. Rod 81 and part 80 are fitted with identical adjustments in which the rods 82 are attached, and they serve as extension cords. Each rod 82 is fitted at one end with a part 83, which plays the role of assembling to a movement module 2, beside wheels 20.

The control of the robot is completed at the checking point, by means of an intranet between the process computer (PC) to the parts of the robot: the robot body and the rotating head.

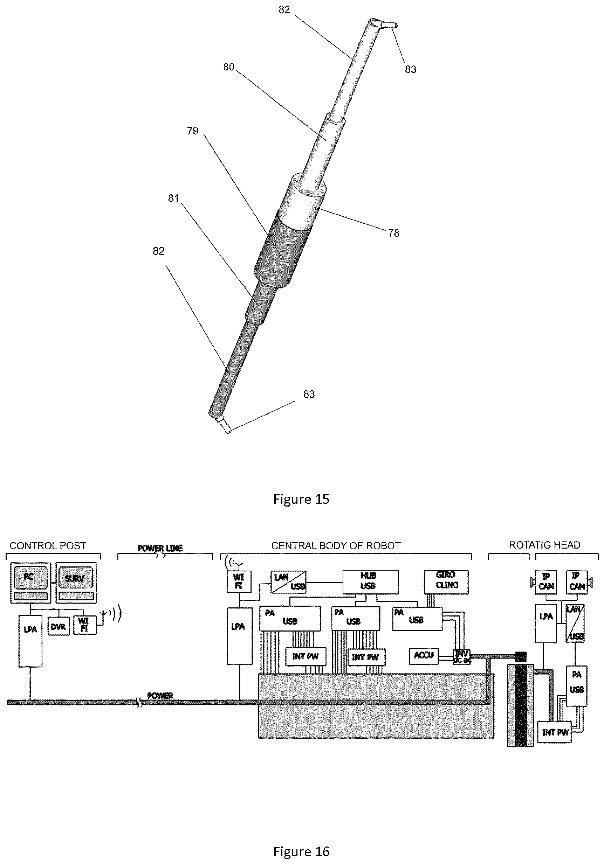

The connection proper at distance is completed through the devices "network powerline adaptor" (LPA) via the cable that grants the supply with electrical current, and also through a "backup" radio, in accordance with figure 16.

The interaction with the robot's actions, and the positioning systems and their sensors is completed through a number of data acquisition cards with digital inputs and outputs, analogic inputs and outputs (PA USB), and power interfaces (INT PW).

All the operations completed as well as the additional inspections can be followed in real time through the surveillance system (SURV) implemented onto the same intranet by means of the high definition cameras (IP CAM). Also, all the images are stored by means of the recorder, in order for them to be analysed later.

The maintenance of the position of the robot with regard to pipe 3 is completed through a gyroscope (GIRO CLINO) that indicates the inclination on the three axes of a fixed reference system, through the differentiated command of different traction groups.

The structure of the command system is simple and useful, but very adaptive at the same time, granting the possibility of adding digital devices both USB and LAN by means of (HUB USB) and of the existing LAN ports.

For the situation in which the cable of charging with energy is destroyed or out-of- order, the storage battery (ACCU) will temporarily charge the robot in view of its recovery using the inverter (INV DC-AC).

The robot-based maintenance method (cleaning - painting) of a pipe entails the following operations:
- the preparation of the pipe for the cleaning process
- the installation of an exhaust port at the downstream inspection hole of the inferior segment
- the preparation of the robot for exploitation
- sanding at the downstream inspection hole up to the inferior inspection hole
- the inspection and completion of possible retouches
- the painting from the downstream inspection hole to the upstream one
- sealing the painted segment with a membrane 77 that is placed under the upstream inspection hole
- the repetition of the procedure in the case of the other segments

The use of the invention grants the following advantages:
- a versatile robot that ensures the possibility of completing all the maintenance and exploitation procedures without the need for the intervention of the human operator
- simple kinematic and building solutions
- flexibility of adjustment to the diameter of the pipe through scissors-typed mechanisms and through the use of supports for the extension f the arms
- large gauge and little weight
- the possibility of control by means of radio waves or through a cable
- safety in the exploitation due to the cable
- the possibility of approaching all the segments of large-sized pipes (straight, tilted, cornered, curved parts, etc.)
- stability in use
- use of a number of hoses without rotating joints
- the continuous rotation of the arms of the trolley for the tools
- elimination of the need to use a central shaft, which grants the possibility of a larger space inside the robot and which can be used to place some high-pressure pumps or pressurized tanks for paint.

## Claims

1. Autonomous robot for the inspection and maintenance of large-sized pipes made of a
central module (1) that plays the role of chassis, a number of movement modules (2), a rotating module (4) equipped with radial arms (5, 6), wherein the movement inside the pipe is completed by means of three movement modules (2) which are displayed radially and at the same distance around the central body (1), each movement module (2) being made of two bars (12, 13) equipped each with a movement group (14) with wheels with tyres (20) operated by a gear-motor (19), the adjustment to the diameter of the pipe being completed by means of the display of the bars (12, 13) in scissors, as well as through modification of the angle between the two bars (12, 13), which are articulated by a rotating joint (15),
wherein for the inspection and the maintenance of the pipes, the robot is equipped with the rotating module (4) that supports a first arm (5) fitted with different tools (40) and a second arm (6) equipped with two video cameras (42), (43) and a proximity sensor (44), the first and second arms (5, 6) being displayed radially in a plane perpendicular to the longitudinal axis of the robot and being extensible in the radial direction wherein for the maintenance of the distance between the robot and the inner surface of the pipe (3), in its curved
areas, the first and second arms (5, 6) can be moved in a plane perpendicular to the longitudinal axis of the robot through a translation joint (31) operated by a motor (76).

2. Autonomous robot for the inspection and maintenance of large-sized pipes, according to claim 1, **characterised in that,** for the completion of the operations of sanding the first arm (5) allows the rotation of a support of a tool holder (39) with the tool (40) and of a flexible hose (41) by means of a motor (61) and of a gearing (62), or by means of a flexible shaft (63) and two gearings (62) and (64), the rotation being taken over from the movement of the rotating module (4) through a planetary transmission with teethed wheels (65, 66, 67, 68, 69) with the ratio i=-1, and **in that** for the operations of painting, the tool holder (39) and a spray (72) do not complete rotary movements, the paint under pressure being brought to the spray through a flexible hose (73) equipped with a rotating joint (74) charged through the inner side of a pipe (49).

3. Autonomous robot for the inspection and maintenance of large-sized pipes, according to claims 1 and 2, **characterised in that,** in order to obtain a light and rigid structure, the central body (1) is formed by two plates (7), on the side, and a plate (8) mounted between the side plates, each plate (7, 8) having a hexagonal-shaped outer contour (7a) and an bore (7b) which creates a space in which other guidelines of the robot can be mounted, the assembly of the plates (7) and (8) being made by means of rods (9) that support the movement modules (2) as well.

4. Autonomous robot for the inspection and maintenance of large-sized pipes, according to claims 1 and 2, **characterised in that,** the bars (12, 13) have the shape of beams with lattice and are made of two lateral walls (12a) each connected through transversal bars (12b), each wall (12a) having a rhombus-shaped central plate (12c), equipped with two or more bores (15a, 15b) that allow the appropriate positioning of the rotating joint (15) when extension cords are used (21).

5. Autonomous robot for the inspection and maintenance of large-sized pipes, according to claims 1 and 2, **characterised in that,** to ensure rigidity and extension for the adaption to various diameters of the pipe (3), the first and second arms (5, 6) are conceived in a telescopic structure made of a number of square pipes (5a, 5b, 5c) which glide in each other, the initial adjustment of the length of the first and second arms (5, 6) being completed through the blocking of the square pipes (5a, 5b, 5c) by means of some bolts, and **in that** for the orientation of the first and second arms (5, 6) rotating joints (34, 35, 36, 37) are respectively used.

6. Autonomous robot for the inspection and maintenance of large-sized pipes, according to claims 1 and 2, **characterised in that,** the rotating module (4) is supplied with compressed air through a space provided between two concentric pipes (49, 53) by means of a rotating joint (54), sealed on inner and outer rings of a support body (52) by means of seals (55, 56), and **in that** the supply of the rotating module (4) with current is achieved through a joint by means of brushes or inductively, the joint having a fixed part (57) and a rotating part (58) to which there is connected a cable (60) through a support (59).

7. Autonomous robot for the inspection and maintenance of large-sized pipes, according to claims 1 and 2, **characterised in that** in order to capture images from the inner circumference of the pipe, across the pipe, and to check the robot's condition, the video cameras (42) and (43) are mounted on a semi-arm (41) and can move around an articulation (37).

8. Autonomous robot for the inspection and maintenance of large-sized pipes, according to claims 1 and 2, **characterised in that,** in order to ensure the hold of the robot when moving along a tilted area, the robot is equipped with a trolley (46) with a cable (47) operated by a motor (48) which works synchronically with the movement groups (14) so that a constant tension is maintained in the cable (47).

9. Autonomous robot for the inspection and maintenance of large-sized pipes, according to claims 1 and 2, **characterised in that,** in order to complete inspections with personnel, the robot can be equipped with a platform being attached to its
rear side, offering the person the possibility of communicating with the personnel outside.

10. Autonomous robot for the inspection and maintenance of large-sized pipes, according
to claims 1 and 2, **characterised in that,** in order to enhance its stability, the robot is
equipped with stabilising bars (78), mounted in triangles between the movement modules (2),
each stabilising bar (78) having in the middle a pneumatic cylinder (79) connected at both
ends to an extension cord (82), fitted with a piece (83), for a joining withe one of the movement modules (2) nearby the wheels (20).

11. Method for the inspection and maintenance of large-sized pipes using the autonomous robot in accordance with the previously mentioned claims, **characterised by** the following operations: the preparation of the pipes for cleaning; the installation of an exhaust at the downstream inspection mouth; the preparation of the robot for exploitation; the sanding from the downstream inspection
mouth to the inspection mouth of an inferior segment; the inspection and completion
of possible retouches; the painting from the downstream segment to the upstream inspection hole; the sealing of
the painted segment by means of a membrane (77) placed under the upstream inspection hole; the repetition of the procedure for the other segments.

## Patentansprüche

1. Autonomer Roboter für die Inspektion und Wartung von großen Rohrleitungen, bestehend aus einem zentralen Modul (1) mit Fahrgestellrolle, einige Bewegungsmodule (2), einem Rotationsmodul (4) mit radialen Armen (5, 6), wobei die Bewegung des Roboters innerhalb der Rohrleitung mithilfe von drei Bewegungsmodulen (2) erfolgt, die radial und in gleichem Abstand um den Zentralkörper (1) angeordnet werden, jedes Bewegungsmodul (2) aus zwei Stangen (12,13) besteht, die jeweils mit einer Verschiebungsgruppe (14) mit luftbereiften Rädern (20) ausgerüstet werden, die mit einem Getriebemotor (19) angetrieben werden, indem die Anpassung an dem Rohrdurchmesser durch die Anordnung der Stangen (12,13) in Scheren und die Änderung des Winkels der beiden Stangen (12,13) erfolgt, die mithilfe eines Rotationskoplers (15) angelenkt werden, zur Inspektion und Wartung der Rohrleitungen ist der Roboter mit einem Rotationsmodul (4), das einen ersten Arm (5), der mit verschiedenen Werkzeugen (40) ausgerüstet ist und einen zweiten Arm (6) unterstützt, der mit zwei Videokameras (42,43) und einem Näherungssensor (44) ausgerüstet ist, indem die Arme (5, 6) radial in einer Ebene, die senkrecht zur Längsachse des Roboters angeordnet sind und in radialer Richtung R ausdehnbar und in Richtung der Pfeile A und B ausrichtbar sind und um den Abstand des Roboters zum Innendurchmesser des Rohres (3) einzuhalten, können der erste und der zweite Arm (5,6) in ihren Biegebereichen mittels eines Translationskopplers in einer Ebene senkrecht zur Längsachse des Roboters verschoben werden (31), der von einem Motor (76) betätigt wird.

2. Autonomer Roboter zur Inspektion und Wartung großer Rohrleitungen gemäß dem Anspruch 1, der **dadurch gekennzeichnet ist, dass** zur Durchführung der Sandstrahlarbeiten ermöglicht der Arm (5) die Drehung des Werkzeughalters (39) mit dem Werkzeug (40) und dem flexiblen Schlauch (41) mittels eines Motors (61) und eines Getriebes (62) oder mittels einer flexiblen Welle (63) und zwei Getrieben (62, 64), wobei die Drehbewegung aus der Bewegung des Rotationsmoduls (4) mittels eines Planetengetriebes mit Zahnrädern (65, 66, 67, 68, 69) mit einem Verhältnis i=-1 übernommen wird und zum Lackieren drehen sich der Werkzeugträger (39) und der Zerstäuber (72) nicht, wobei die Druckfarbe mit einem flexiblen Schlauch (73) zum Zerstäuber gebracht wird, der mit einem Drehkoppler (74) versehen ist, der durch den Innenraum des Rohres (49) versorgt wird.

3. Autonomer Roboter zur Inspektion und Wartung großer Rohrleitungen gemäß den Ansprüchen 1 und 2, **gekennzeichnet dadurch dass** um eine leichte und starre Struktur zu erhalten, besteht der Zentralkörper (1) aus zwei Seitenplatten (7) und einer zwischen den Seitenplatten montierten Platte (8), wobei jede Platte (7, 8) eine äußere hexagonale Form (7a) und eine Innenbohrung (7b) aufweist, die einen Raum schafft, in dem andere Roboterteile montiert werden, wobei die Platten (7, 8) mittels der die Module (2) tragenden Stangen (9) zusammengebaut werden.

4. Autonomer Roboter zur Inspektion und Wartung großer Rohrleitungen gemäß den Ansprüchen 1 und 2, **gekennzeichnet dadurch dass** die Stangen (12, 13) die Form von Gitterbalken haben und jede aus zwei Seitenwänden (12a) bestehen, die durch Querstangen (12b) verbunden sind, wobei jede Wand (12a) eine zentrale rautenförmige Platte (12c) aufweist, die mit zwei oder mehreren Aussparungen (15a, 15b) versehen wird, die eine entsprechende Positionierung des Rotationskopplers (15) bei Verwendung der Verlängerungen (21) ermöglichen.

5. Autonomer Roboter zur Inspektion und Wartung großer Rohrleitungen gemäß den Ansprüchen 1 und 2, **gekennzeichnet dadurch dass** um Steifigkeit und Ausdehnung in Richtung R zu gewährleisten, der erste und der zweite Arm (5,6) in einer Teleskopstruktur konzipiert werden, die aus ineinander gleitenden Vierkantrohren (5a, 5b, 5c) besteht, wobei die anfängliche Einstellung der Länge des Arms durch das Verriegeln der Rohre mittels in den Figuren nicht dargestellter Schrauben hergestellt wird, und zur Ausrichtung des ersten und des zweiten Arms werden die Rotationskoppler (34, 35, 36, 37) verwendet.

6. Autonomer Roboter zur Inspektion und Wartung großer Rohrleitungen gemäß den Ansprüchen 1 und 2, **gekennzeichnet dadurch dass** die Druckluftversorgung des Rotationsmoduls erfolgt durch den Raum zwischen den Rohren (49) und (53) mittels des am Innen- und Außenring mittels eines Trägers (52) und der Dichtungen (55) und (56) abgedichteten Rotationskopplers (54) und die Stromversorgung des Rotationsmoduls 4 erfolgt durch eine Bürsten- oder Induktionskupplung, wobei die Kupplung einen festen Teil (57) und einen rotierenden Teil (58) aufweist, von dem das Kabel (60) mit einem Träger (59) verbunden ist.

7. Autonomer Roboter zur Inspektion und Wartung großer Rohrleitungen gemäß den Ansprüchen 1 und 2, **gekennzeichnet dadurch dass** um Steifigkeit und um Bilder vom Innenumfang des Rohrs entlang den Rohr aufzunehmen und den Zustand des Roboters zu untersuchen, sind die Videokameras (42) und (43) auf einem Halbarm (41) montiert und können sich um das Gelenk (37) drehen.

8. Autonomer Roboter zur Inspektion und Wartung großer Rohrleitungen gemäß den Ansprüchen 1 und 2, **gekennzeichnet dadurch dass** um die Aufrechterhaltung des Roboters sicherzustellen, ist er mit einer Winde (46) und einem Kabel (47) versehen, das von einem Motor (48) angetrieben wird, der mit den Traktionsgruppen (14) synchronisiert ist, um eine konstante Spannung im Kabel (47) aufrechtzuerhalten.

9. Autonomer Roboter zur Inspektion und Wartung großer Rohrleitungen gemäß den Ansprüchen 1 und 2, **gekennzeichnet dadurch dass** zur Durchführung von Inspektionen mit Personal der Roboter über die Möglichkeit verfügt, eine Plattform hinten zu der Winde (46) anzubringen, die es der Person ermöglicht, mit dem externen Personal zu kommunizieren.

10. Autonomer Roboter zur Inspektion und Wartung großer Rohrleitungen gemäß den Ansprüchen 1 und 2, **gekennzeichnet dadurch dass** zur Verbesserung der Stabilität der Roboter mit Stabilisierungsstangen (78) ausgestattet ist, die in einem Dreieck zwischen den Traktionsmodulen (2) montiert sind, wobei jede Stabilisierungsstange (78) in der Mitte einen Pneumatikzylinder (79) aufweist, der an beiden Enden mit einer Verlängerung (82) verbunden ist, die mit je einem Stück (83) zur Verbindung mit jedem Modul (2) in der Nähe der Räder (20) versehen ist.

11. Verfahren zur Roboterinspektion und -wartung von großen Rohrleitungen, **dadurch gekennzeichnet, dass** es einen Roboter gemäß den vorhergehenden Ansprüchen verwendet und die Durchführung der folgenden Operationen beinhaltet: die Vorbereitung des Rohrs zur Reinigung; die Installation eines Abziehers an dem vorgelagerten Loch des Unterteils; die Vorbereitung des Roboters für den Betrieb; Sandstrahlen vom Einsichtloch des vorgelagerten Abschnitts zum Einsichtloch des unteren Abschnitts; die Inspektion und eventuelle Retusche; die Lackierung von dem vorgelagerten zum nachgelagerten Einsichtloch; das Versiegeln des gefärbten Abschnitts mit einer Membran (77) die sich unterhalb des nachgelagerten Einsichtlochs befindet; die Wiederaufnahme des Verfahrens für die anderen Abschnitte.

## Revendications

1. Robot autonome pour le contrôle et la maintenance des tubes de grandes dimensions composé d'un module central (1) au rôle de châssis, des modules de déplacement (2), un module de rotation (4) avec des bras radiaux (5,6), où le déplacement du robot à l'intérieur du tube se fait à l'aide de trois modules de déplacement (2) disposés radialement et d'une manière équidistante autour du corps central (1), chaque module de déplacement (2) étant composé de deux barres (12,13) munies chacune d'un groupe de déplacement (14) avec des roues à pneus (20) actionnées par un motoréducteur (19), l'adaptation au diamètre du tube se réalisant par la disposition des barres (12,13) en ciseaux et la modification de l'angle entre les 2 barres (12,13) qui sont articulées à l'aide d'un raccord de rotation (15), pour le contrôle et la maintenance des tubes le robot est muni d'un module de rotation (4) qui soutient un premier bras (5) muni de différents outils (40) et un deuxième bras (6) muni de deux caméras vidéo (42,43) et un senseur des proximité (44) bras (5,6) étant disposés radialement dans un plan perpendiculaire par l'axe longitudinal du robot, extensibles sur la direction radiale R et orientables dans le sens des flèches A et B, et pour maintenir la distance du robot par rapport au diamètre intérieur du tube (3), dans les zones de courbure de ceci, le premier et le deuxième bras (5,6) peuvent être déplacés dans un plan perpendiculaire sur l'axe longitudinal du robot par un raccord de translation (31) actionné par un moteur (76).

2. Robot autonome pour le contrôle et la maintenance des tubes de grandes dimensions selon la revendication 1, **caractérisé par le fait que,** pour réaliser les opérations de sablage le bras (5) permet la rotation du support du porte-outils (39) avec l'outil (40) et le tuyau flexible (41) par l'intermède d'un moteur (61) et d'un engrenage (62), ou par l'intermède d'un arbre flexible (63) et deux engrenages (62,64), le mouvement de rotation étant repris par le mouvement du module de rotation (4) par une transmission planétaire à roues dentées (65, 66, 67, 68, 69) avec le rapport i=-1, et pour des opérations de peinture le porte-outils (39) et le pulvérisateur (72) n'effectue pas de mouvement de rotation, la peinture sous pression étant amenée au pulvérisateur par un tuyau flexible (73) muni d'un raccord rotatif (74) alimenté par l'intérieur du tube (49).

3. Robot autonome pour le contrôle et la maintenance des tubes de grandes dimensions selon les revendications 1 et 2, **caractérisé par le fait que,** afin d'obtenir une structure légère et rigide, le corps central (1) est composé de deux plaques (7), latérales et une plaque (8) installée entre les plaques latérales, chaque plaque (7,8) ayant le contour extérieur de forme hexagonale (7a) et un alésage intérieur (7b) qui crée un espace où on installe d'autres repères du robot, l'assemblage des plaques (7,8) étant fait à l'aide des tiges (9) qui soutiennent aussi les modèles (2).

4. Robot autonome pour le contrôle et la maintenance des tubes de grandes dimensions selon les revendications 1 et 2, **caractérisé par le fait que,** les barres (12,13) ont la forme de poutres à treillis et sont composées par deux parois latérales (12a) connectées par des barres transversales (12b), chaque paroi (12a) ayant une plaque centrale (12c), sous forme de rhombe et munie de deux ou plusieurs alésages (15a,15b) qui permettent le positionnement approprié du raccord de rotation (15) lorsqu'on utilise les rallonges (21).

5. Robot autonome pour le contrôle et la maintenance des tubes de grandes dimensions selon les revendications 1 et 2, **caractérisé par le fait que,** pour assurer de la rigidité et de l'extension sur la direction R, le premier et le deuxième bras (5,6) sont conçus dans une structure télescopique formée de tubes carrées (5a,5b,5c), qui coulissent l'un dans l'autre, le réglage initial de la longueur du bras se fait par le blocage des tubes à l'aide de vis non représentées dans les figures, et pour l'orientation du premier et du deuxième bras, on utilise les raccords de rotation (34,35,36,37).

6. Robot autonome pour le contrôle et la maintenance des tubes de grandes dimensions selon les revendications 1 et 2, **caractérisé par le fait que,** l'alimentation en air comprimé du module de rotation se fait par l'espace entre les tuyaux (49) et (53) à l'aide du raccord rotatif (54), étanchée sur l'anneau intérieur et celui extérieur à l'aide d'un support (52) et avec les étanchéités (55) et (56), et l'alimentation en courant du module rotatif 4 se fait par un couplage à brosses ou inductif, le couplage ayant une partie fixe (57) et une partie rotative (58) dont on lie le câble (60) avec un support (59).

7. Robot autonome pour le contrôle et la maintenance des tubes de grandes dimensions selon les revendications 1 et 2, **caractérisé par le fait que**, pour reprendre des images sur la circonférence intérieure du tube, le long du tube, et pour contrôler l'état du robot, les caméras vidéo (42) et (43) sont installées sur un demi-bras (41) et peuvent tourner autour de l'articulation (37).

8. Robot autonome pour le contrôle et la maintenance des tubes de grandes dimensions selon les revendications 1 et 2, **caractérisé par le fait que**, pour assurer l'équilibre du robot durant un déplacement en pente il est muni d'un treuil (46) et d'un câble (47) actionné par un moteur (48) qui travaille synchronisé avec les groupes de traction (14) tel qu'on maintient une tension constante dans le câble (47).

9. Robot autonome pour le contrôle et la maintenance des tubes de grandes dimensions selon les revendications 1 et 2, **caractérisé par le fait que,** pour effectuer des contrôles avec le personnel, le robot a la possibilité d'attacher une plateforme à la partie arrière, vers le treuil (46), en donnant à la personne la possibilité de communiquer avec le personnel de l'extérieur.

10. Robot autonome pour le contrôle et la maintenance des tubes de grandes dimensions selon les revendications 1 et 2, **caractérisé par le fait que,** pour améliorer la stabilité le robot est muni de barres stabilisatrices (78), installées en triangle entre les modules de traction (2), chaque barre stabilisatrice (78) ayant au milieu un cylindre pneumatique (79) connecté aux deux bouts avec une rallonge(82), muni d'une pièce(83), pour un assemblage avec chaque module (2), près des roues (20).

11. Méthode pour le contrôle et la maintenance robotisée des tubes de grandes dimensions **caractérisée par le fait qu'**elle utilise un robot selon les revendications précédentes et suppose d'effectuer les opérations suivantes : préparer le tube pour le nettoyage ;
installer un exhausteur au bout aval du tronçon inférieur ; préparer le robot pour l'exploitation ; sablage à partir du regard de visite du tronçon vers l'aval jusqu'au regard de visite
du tronçon inférieur ; contrôler et effectuer les éventuels retouches ; peinture en aval vers le regard de visite en amont ; sceller le tronçon peint avec une membrane (77) placée sous le regard de visite en amont ; reprendre la procédure pour les autres tronçons.
